# EUROPÄISCHE PATENTSCHRIFT

(11) **EP 1 550 236 B1**
(45) Veröffentlichungstag und Bekanntmachung des Hinweises auf die Patenterteilung: **03.01.2007**
(21) Anmeldenummer: 03750367.9
(22) Anmeldetag: 22.09.2003
(51) Int. Cl.: H04B 5/00, B60C 23/04, H04B 13/00

(54) **NACHRICHTENÜBERTRAGUNGSSYSTEM FÜR EIN REIFENDRUCKMESSSYSTEM**
INFORMATION TRANSMISSION SYSTEM FOR A TYRE PRESSURE MEASUREMENT SYSTEM
SYSTEME DE TRANSMISSION DE MESSAGES POUR UN SYSTEME DE MESURE DE LA PRESSION DE PNEUS

(30) Priorität: 11.10.2002 DE 10247526
(43) Veröffentlichungstag der Anmeldung: 06.07.2005
(60) Teilanmeldung: 05027848.0
(73) Patentinhaber: SIEMENS AKTIENGESELLSCHAFT, 80506 München (DE)
(72) Erfinder: HRABY, Günther, A-3021 Pressbaum (AT); RENNER, Alexander, A-1120 Wien (AT); SCHINDELARZ, Georg, A-1050 Wien (AT); VEITH, Peter, 81104 Bratislava (AT)
(86) Internationale Anmeldenummer: PCT/DE2003/003141
(87) Internationale Veröffentlichungsnummer: WO 2004/036784

(56) Entgegenhaltungen:
- WO-A-00/15931
- WO-A-94/24777
- DE-A- 19 501 887
- DE-A- 19 939 941
- GB-A- 2 122 757

## Beschreibung

Die Erfindung betrifft ein Nachrichtübertragungssystem für ein Reifendruckmesssystem eines Kraftfahrzeugs, mit dem Nachrichten von einem Sender zu einem Empfänger übertragen werden. Sie betrifft auch einen Sender und einen Empfänger für dieses Nachrichtübertragungssystem.

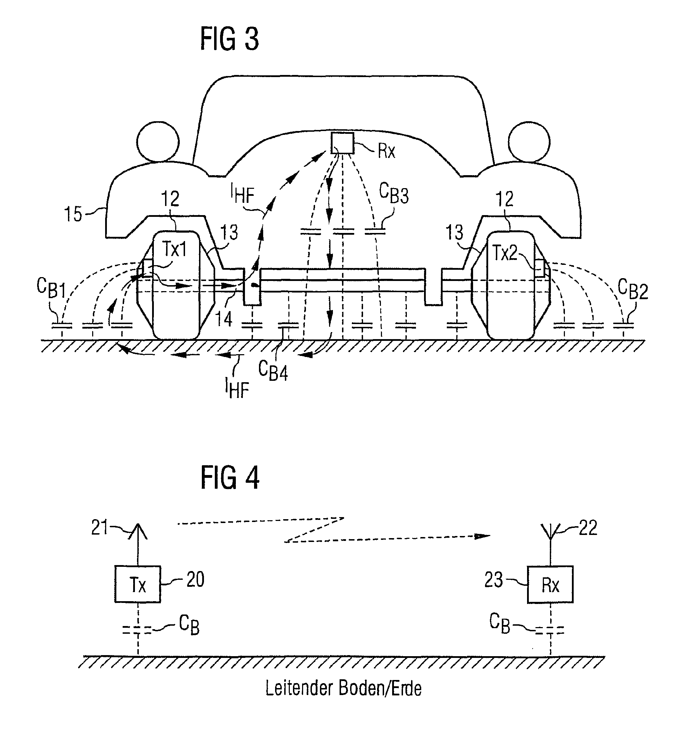

Bei herkömmlichen Nachrichtenüberragungssystemen, bei denen Signale per Funk übertragen werden, ist ein Funksender 20 (Figur 4) vorhanden, der eine Antenne 21 aufweist, über die elektromagnetische Wellen (hier als gestrichelter, blitzförmiger Pfeil dargestellt) abgestrahlt werden. Eine Antenne 22 eines Funkempfängers 23 empfängt die elektromagnetische Wellen und extrahiert daraus die übertragenen Nachrichten.

Die eigentliche Nachrichtenübertragung findet dabei durch elektromagnetische Strahlung im Fernfeld statt. Hierzu muss jede Antenne 21, 22 auf die Frequenz der abgestrahlten elektromagnetischen Felder angepasst sein. Ansonsten wird die Qualität der Nachrichtenübertragung stark verschlechtert.

Solch eine Funkübertragung im Hochfrequenzbereich hat den Nachteil, dass ein hoher Material- und Komponentenaufwand erforderlich ist, wie beispielsweise Antennen 21, 22 , HF- Sende- und Empfangsteil, Steuerteil, Basisband, usw. Für eine solche Funkübertragung wird sehr viel Strom verbraucht, um u.a. die Verluste auf der Übertragungsstrecke zu kompensieren. Zudem werden elektromagnetische Wellen auch in eine unerwünschte Umgebung gesendet, da ihre Amplitude nur langsam abklingt. Dies führt dazu, dass die Nachrichten, die übertragen werden, leicht abgehört oder gestört werden können. Au-ßerdem entstehen störende Interferenzen mit anderen Systemen, die einerseits zu einem verschlechterten Empfang führen und andererseits andere Systeme ungünstig beeinflussen können. Ferner ist die Anzahl der Teilnehmer eines Funk-Übertragungskanals begrenzt.

Nachrichten können auch bekannterweise im Hochfrequenzbereich leitungsgebunden übertragen werden. Hierzu wird eine Leitung mit Hin- und Rückleiter mit einem Wechselstrom gespeist, wobei die Leitungsinduktivität und die Leitungskapazität den Energietransport beeinflussen. Die Ausbreitungsgeschwindigkeit ist dabei begrenzt. Je höher die übertragene Frequenz ist, desto aufwendiger und teurer müssen die Leitungen ausgebildet sein.

Der Nachteil bei dieser Nachrichtübertragung ist es, dass Hin- und Rückleiter benötigt werden, die von ihrer Umgebung elektrisch isoliert sind. Ein Anzapfen der Leitungen führt zu einer verschlechterten Nachrichtenübertragung. Daher müssen die Auskoppelstellen speziell ausgebildet sein. Die Hin- und Rückleiter müssen mit ihrer Isolierung an die Umgebungsbedingungen angepasst sein, damit keine Kurzschlüsse erzeugt werden.

Aus der WO 00/15931 ist ein elektronisches Kommunikationssystem für ein Fahrzeug bekannt, bei dem mit Hilfe eines Datenträgers Zugang zu einem Kraftfahrzeug geschaffen werden soll. Hierzu weist das Fahrzeug eine Basisstation mit einem Empfänger auf. Der Empfänger ist mit einer fahrzeugseitigen Elektrode galvanisch verbunden. Ebenso ist er über eine Elektrode mit der Fahrzeugmasse verbunden. Der Datenträger weist zwei Elektroden auf, über die ein elektrisches Feld erzeugt wird. Für den Zugang zum Kraftfahrzeug muss der Benutzer seinen Datenträger bei sich tragen. Zum Aussenden der Daten werden diese über die Elektrode über ein kapazitives Feld in den Körper der Person gekoppelt und von dort über das elektrische Feld zu der Elektrode des Empfängers. Es findet also eine kapazitive Kopplung von der Elektrode des Datenträgers über den Körper zur Elektrode des Fahrzeugs als Empfänger statt.

Zur Daten-/Signalübertragung findet einerseits eine kapazitive Kopplung statt und andererseits eine galvanische Signalübertragung im herkömmlichen Sinne über Leitungen innerhalb des Kraftfahrzeugs, genauer gesagt innerhalb des Empfängers, wenn die Elektrode als Antenne angesehen wird, die über Leitungen mit dem eigentlichen Empfänger galvanisch verbunden ist.

Aus der WO 94/24777 ist ferner eine Vorrichtung zum Übertragen von Daten bekannt, bei der eine kapazitive Einkopplung der Daten in einen elektrischen Leiter durchgeführt wird. Die Daten werden über einen Sender mit Kondensatoren kapazitiv in ein Stromnetz gekoppelt. Die Erdleitung ist direkt mit einem Verstärker galvanisch verbunden und stellt den Rückkoppelweg dar. In den Leitungen findet dann die gewöhnliche Datenübertragung per Hochfrequenz und galvanischer Verbindung statt. Hierzu muss das elektrisch leitende Element eine stehende Welle tragen können (Seite 12, Zeile 36 bis Seite 13, Zeile 1).

Aus der GB A2 122 757 ist ein Reifendruckmesssystem eines Kraftfahrzeugs bekannt, bei dem ein Sender in jedem Reifen sowie dazu gehörige Empfänger fahrzeugseitig angeordnet sind und die Nachrichtenübertragung über kapazitive Kopplung zwischen Kondensatorplatten stattfindet.

Die Aufgabe der Erfindung ist es, ein Nachrichtenübertragungssystem für ein Reifendruckmesssystem eines Kraftfahrzeugs mit einem Sender und einem Empfänger zu schaffen, das einfach aufgebaut ist, eine zuverlässige Nachrichtenübertragung unter Nutzung vorhandener Infrastruktur gewährleistet und universell eingesetzt werden kann.

Diese Aufgabe wird durch ein Nachrichtenübertragungssystem mit den Merkmalen von Patentanspruch 1 gelöst.

Dabei weist das für ein Reifendruckmesssystem vorgesehene Nachtrichtübertragungssystem einen Sender auf, mit dessen Koppelelement im Wesentlichen ein elektrisches Nahfeld ausgesendet wird. Dieses Feld wird in einen Infrastrukturkörper eingekoppelt, der ein elektrisch leitendes Element aufweist, in dem dann ein leitungsgebundener Leitungsstrom geführt wird. Der Leitungsstrom kann durch einen Empfänger mit Hilfe eines weiteren Koppelelements ausgekoppelt werden. Als Infrastrukturkörper wird dabei die Karosserie und das Fahrwerk des Kraftfahrzeugs, inklusive Räder mit Reifen, verwendet. In jedem Reifen ist jeweils ein Sender angeordnet, der die zu übertragenden Daten/Nachrichten über das metallene und elektrisch leitende Fahrwerk, Felgen und Räder, sowie die Karosserie zu einem fahrzeugseitigen Empfänger überträgt. In gleicher Weise kann eine weitere drahtlose Nachrichtenübertragung von oder zu Sensoren und/oder Aktuatoren in einem Kraftfahrzeug realisiert werden. Der Stromkreis wird geschlossen über Verschiebeströme, die über Auskoppelkapazitäten und Bodenkapazitäten von Sender und Empfänger flie-ßen, sowie über Erde oder den leitenden Boden zurück fließen.

Dies hat den Vorteil, dass aufgrund der kapazitiven Einkopplung in den Infrastrukturkörper die Verluste eines strahlenden Systems vermieden werden, und somit ein sehr geringer Stromverbrauch in Sender und Empfänger vorliegt. Es werden keine sich weit ausbreitenden, unerwünschten Streufelder produziert, da die Einkopplung vom Sender in den Infrastrukturkörper durch ein elektrisches Nahfeld mit einer nur geringen Reichweite vonstatten geht. Als Infrastrukturkörper können alle ohnehin vorhandenen Körper verwendet werden, die auch zumindest teilweise elektrisch leitende Elemente aufweisen. Die Hauptverluste entstehen lediglich in Kopplungskapazitäten zwischen Sender/Empfänger und Erde. Geringe Verluste entstehen zudem noch zwischen Kopplungselementen und Infrastrukturkörper, falls die Abstände dazwischen zu groß werden sollten.

Weitere Vorteile des erfindungsgemäßen Nachrichtübertragungssystems sind die Verlagerungen der Übertragungsstrecke vom Strahlungsfernfeld in ein quasistationäres Nahfeld mit einem hochfrequenten Wechselstrom. Dadurch wird grundsätzlich eine Ausstrahlung der hochfrequenten Energie in die Umgebung unterbunden, welche ansonsten zunehmend Störungen in fremden und eigenen Systemen zu Folge haben könnten. Eine Zulassung bei Funkbehörden ist somit nicht mehr notwendig, da die Störreichweite und Amplituden nur ganz gering gehalten werden können. Die Verluste auf der Übertragungsstrecke werden reduziert und der Stromverbrauch kann minimiert werden. Es werden keine Antennen benötigt, da das auszusendende elektromagnetische Feld entweder galvanisch oder kapazitiv in den Infrastrukturkörper eingekoppelt wird. Somit kann das Nachrichtenübertragungssystem flexibel und mobil eingesetzt werden. Mit dem Wegfall der Antennen wird das elektronische Equipment einfacher, es wird keine für die Antenne spezielle Positionierung benötigt, wobei der Sensor, ein Steuerteil und eine Übertragungseinheit auf einem Halbleiterchip ausgeführt werden können.

Eine Signalübertragung im quasistationären elektrischen Feld benötigt keine Taktgewinnung auf der Empfängerseite, denn der Systemtakt könnte einheitlich in das Übertragungsmedium (Infrastrukturkörper mit seinem Leiterelement) eingespeist werden. Bei diesem Nachrichtübertragungssystem können die Methoden der Funktechnik, wie Trägeraufbereitung, Modulation, Multiplexverfahren, Empfang und Demodulation uneingeschränkt angewendet werden.

Vorteilhafte Ausgestaltungen der Erfindung werden durch die Merkmale der Unteransprüche wiedergegeben. Besonders vorteilhaft ist es dabei, ohnehin vorhandene Infrastrukturkörper zum Übertagen der Nachrichten zu verwenden. Das Medium, d.h. das leitende Element des Infrastrukturkörpers, braucht dazu nicht besonders ausgestaltet zu sein. Es genügt, wenn das leitende Element zeitinvariant elektrisch leitfähig ist, damit keine Verschlechterung der Übertragung erreicht wird. Vorteilhaft ist es zudem, wenn der Infrastrukturköper eine elektrische Impedanz gegenüber Erdpotential aufweist, wodurch dann eine gute Rückleitung über Erde bei der Nachrichtenübertragung gebildet wird. Die vorteilhafte Nutzung des Frequenzbandes im Bereich zwischen 5 MHz und 50 MHz führt dazu, dass die elektronische Schaltung in stromsparender CMOS-Technologie ausgeführt werden kann.

Ausführungsbeispiele der Erfindung werden anhand der schematischen Zeichnung näher erläutert. Es zeigen:
- Figur 1: den prinzipiellen Aufbau eines erfindungsgemäßen Nachrichtenübertragungssystems,
- Figur 2: ein Blockschaltbild eines Senders/Empfängers in einem Nachrichtenübertragungssystem nach Figur 1,
- Figur 3: ein Blockschaltbild eines Ausführungsbeispieles des Nachrichtenübertragungssystems bei Verwendung in einem Reifendruckmesssystem eines Kraftfahrzeugs und
- Figur 4: ein Blockschaltbild eines herkömmlichen Funk-Nachrichtenübertragungssystems.

Ein erfindungsgemäßes Nachrichtenübertragungssystem weist einen Sender 1 mit einem Sendeelement Tx auf, der über ein Koppelelement 2 ein elektrisches Nahfeld als Streufeld erzeugt. Mit Hilfe des elektrischen Feldes soll ein Signalstrom in einem Infrastrukturkörper 3 induziert und eine Nachricht (Daten, Informationen, Signale) übertragen werden. Auf der Empfangsseite ist ein Empfänger 4, der ebenfalls ein Koppelelement 5 aufweist, zum "Empfangen" des vom Signalstrom induzierten, elektrischen Feldes.

Zwischen Sender 1 und Empfänger 4 ist der Infrastrukturkörper 3 angeordnet, der ein oder mehrere von Erde (Erdpotenzial) elektrisch isolierte und elektrisch leitende Elemente 6 (als Leiterelement oder elektrischer Leiter bezeichnet) aufweist. Sender 1 und Empfänger 4 weisen jeweils eine Kapazität gegen Erde auf (im folgenden als Bodenkapazität C_{B} bezeichnet).

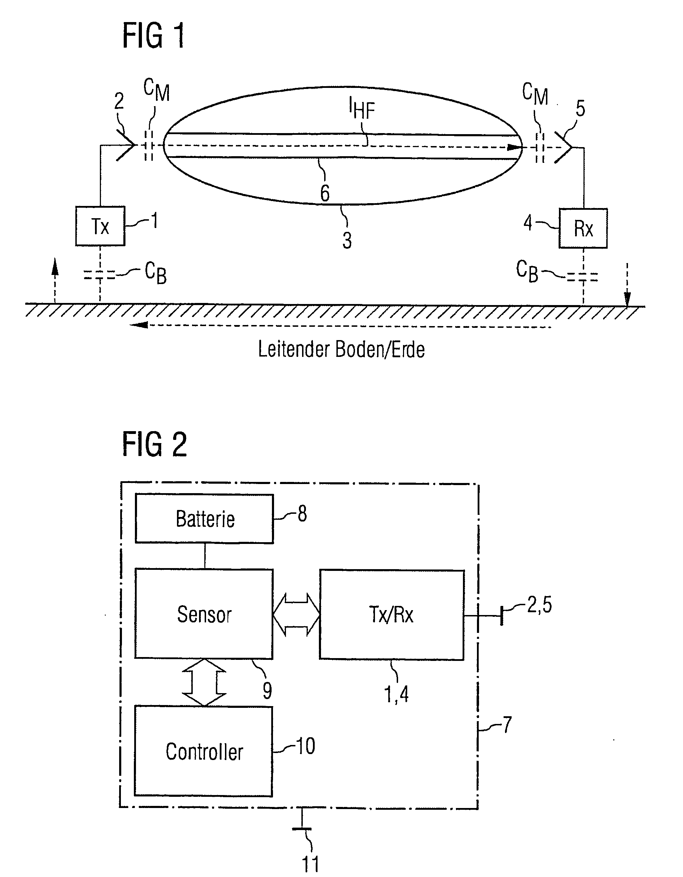

Zum Übertragen von Nachrichten erzeugt der Sender 1 über sein Koppelelement 2 ein quasistationäres elektrisches Nahfeld, das in das elektrische Leiterelement des Infrastrukturkörpers 3 eingestreut wird. Der freie Abstand zwischen dem Koppelelement 2 und dem Leiterelement 6 wird durch einen Verschiebungsstrom überbrückt, der über die "virtuelle" Kapazität C_{M} (gestrichelt in Figur 1 dargestellt) zwischen Koppelelement 2 und Leiterelement 6 fließt. In dem elektrischen Leiterelement 6 fließt ein hochfrequenter Leitungsstrom I_{HF} (gestrichelter Pfeil im Leiterelement 6 in Figur 1), der im Bereich des Koppelelements 5 des Empfängers 4 ein quasistationäres elektrisches Nahfeld erzeugt, das in das Koppelelement 2 gestreut wird, wodurch die übertragenen Nachrichten empfangen werden.

Der Stromkreis von Sender 1 zum Empfänger 4 und zurück ist senderseitig über die Koppelkapazität C_{M} zwischen Koppelelement 2 und Leiterelement 6 des Infrastrukturkörpers 3, durch das elektrische Leiterelement 6, empfangsseitig über die Koppelkapazität C_{M} zwischen Leiterelement 6 und Koppelelement 5 des Empfängers 4, über die Koppelkapazität C_{B} zwischen Empfänger 4 und Erde, und zurück über Erde als elektrischer Leiter und die Koppelkapazität oder Bodenkapazität C_{B} zwischen Erde und Sender 1 geschlossen. Dabei fließt über die jeweiligen Koppelkapazitäten C_{B}, C_{M} der aus der Funkübertragung bekannte Verschiebungsstrom und im Leiterelement 6 des Infrastrukturkörpers 3 sowie der Erde ein Leitungsstrom.

Als Infrastrukturkörper 3 mit seinem elektrischen Leiterelement 6 können ohnehin vorhandene Infrastrukturkörper 3, wie beispielsweise die Karosserie eines Autos, das Fundament einer Werksmaschine, ein gummiertes Kettenfließband, Turbinenschaufeln, metallisierte Produktetiketten, die Heizungsinstallation in einem Gebäude usw. verwendet werden.

Durch das quasistationäre elektrische Nahfeld zwischen Koppelelement 2 und Infrastrukturkörper 3, genügt eine relativ kleine Leistung, um über das Nahfeld eine entsprechende Wechselspannung in dem Leiterelement 6 zu induzieren. Das Übertragungssystem ist energiesparend und weist somit nur geringe Verluste auf. Die Reichweite des Nahfeldes ist allerdings sehr gering, so dass die Koppelelemente 2, 5 jeweils in der Nähe des Infrastrukturkörpers 3 mit seinem elektrischen Leiterelement 6 angeordnet sein müssen. Dies hat hingegen den Vorteil, dass die übertragenen Nachrichten nur schwer aus der Ferne abgehört oder manipuliert werden können, da eine Feldausbreitung im Fernfeld nicht vorhanden ist und Streufelder sehr schnell in ihrer Amplitude abklingen (proportional zu 1/r² oder 1/r³).

Die Trägerfrequenz kann so gewählt werden, dass die Impedanzen der Bodenkapazitäten C_{B} und der Kopplungskapazitäten C_{M} zwischen Koppelelementen 2, 5 und Infrastrukturkörper 3 sehr niederohmig sind, wodurch der dadurch erfolgte Spannungsabfall und infolgedessen die Verluste gering sind. Die Kopplungskapazitäten C_{M} zwischen jeweiligen Koppelelement 2, 5 und dem Infrastrukturkörper 3 hängen darüber hinaus von den gegenseitigen Abständen und Abmessungen bei der jeweiligen Anwendung ab (kann analog wie die Kapazität eines Plattenkondensators berechnet werden).

Das elektrische Leiterelement 6 des Infrastrukturkörpers 3 sollte aus einem weitgehend homogenen Material bestehen und seine Leitfähigkeit sollte zeitinvariant sein (d.h. zeitlich nicht ändern). Somit liegt dann ein Übertragungsmedium für einen hochfrequenten Wechselstrom vor, das ein kompliziertes RCL-Netzwerk mit reproduzierbaren Verhältnissen darstellt. Die Verluste sind dennoch wesentlich geringer als in einem Hochfrequenzfunkkanal. Der elektrische Leiterelement 6 muss nicht einstückig sein. Kurze Abstände (nicht leitende Abschnitte) zwischen leitendem Material stellen wiederum Kopplungskapazitäten dar, die gut durch einen Verschiebungsstrom überbrückt werden können.

Der schematische Aufbau eines Senders 1 oder Empfängers 4 ist in der Figur 2 dargestellt. Dabei weist der jeweilige Sender 1 oder Empfänger 4 ein Gehäuse 7 auf, in dem ein Sendeelement Tx bzw. ein Empfangselement Rx angeordnet ist. Sender 1 und Empfänger 4 weisen jeweils eigenständige Energiequellen 8 auf, mögliche Sensoren 9 zum Messen von physikalischen Grö-ßen, eine Steuereinheit (Controller) 10 sowie die jeweiligen Koppelelemente 2, 5 und Bodenkoppelelemente 11.

Mit dem Sender 1 bzw. Empfänger 4 ist jeweils ein Koppelelement 2, 5 elektrisch verbunden, das eine kapazitive Elektrode darstellt. Es kann auch ein Kondensator als Koppelelement 2, 5 verwendet werden. Durch das Koppelelement 2, 5 wird ein im wesentlichen elektrisches Nahfeld (Streufeld) erzeugt und im Nahbereich abgestrahlt. Das Koppelelement 2, 5 kann auch durch eine galvanische Verbindung ersetzt werden. Dann fließt der hochfrequente Leitungsstrom vom Sender 1 über ein nicht dargestelltes Anpassungsnetzwerk und über die galvanische Verbindung unmittelbar zum Leiterelement 6 des Infrastrukturkörpers 3.

Zwischen Sender 1 und galvanischer Verbindung ist dann ein Anpassungsnetzwerk, das beispielsweise zumindest einen konzentrierten Kondensator aufweisen kann, über den das gestreute Nahfeld in die galvanische Verbindung eingekoppelt wird.

Sender 1 bzw. Empfänger 4 weisen jeweils eine Koppelkapazität gegen Erde (als Bodenkapazität C_{B} bezeichnet) auf, die durch eine Elektrode (auch als Bodenkoppelelement 11 bezeichnet) des Senders 1 und dem leitenden Boden als zweite Elektrode gebildet wird. Zudem weist jeder Sender 1 und jeder Empfänger 4 jeweils zumindest ein Koppelelement 2, 5 (auch als Mediumkoppler bezeichnet) auf, das die elektrische Kopplung zum elektrischen Leiterelement 6 des Infrastrukturkörpers 3 bewerkstelligt.

Mit Hilfe der Steuereinheit 10 können Sensorsignale oder vom Sensor erhaltene Daten auf einen hochfrequenten Träger als zu übertragende Daten aufmoduliert bzw. demoduliert werden. Bei solchen Sendern 1 und Empfängern 4 können herkömmliche Techniken der Nachrichtenübertragung, wie Modulation und Demodulation, die dem Fachmann hinreichend bekannt sind, verwendet werden.

Da in dem Leiterelement 6 des Infrastrukturkörpers 3 ein hochfrequenter Leitungsstrom (I_{HF}) fließt, ist die Dämpfung entlang des Leiterelements 6 wesentlich geringer als bei einer vergleichbaren Funkübertragung, bei der ein stärker verlustbehafteter Verschiebungsstrom fließt. Somit genügt es, wenn das elektrische Feld mit geringerer Energie erzeugt wird, um gegenüber der gewöhnlichen Funktechnik Energie einzusparen, um dennoch relativ große Reichweiten für die Übertragung zu erhalten.

Auch wenn über den Infrastrukturkörper 3 nur in einer Richtung Daten übertragen werden, so kann dennoch eine einheitliche Synchronisation - wie bei Zweiwegsystemen - stattfinden, indem der Systemtakt in das Übertragungsmedium eingespeist wird. Aus diesem Grunde wird auch nur ein einziger elektrisches Leiterelement 6, das heißt eine einzige elektrische Verbindung zwischen den Koppelelementen 2, 5 benötigt. Man spricht dann von einem unsymmetrischen elektrischen Leiterelement 6, das als Rückleiter das Erdpotential ausnützt. Die Energieeinspeisung in den Infrastrukturkörper 3 geschieht dann eben auch unsymmetrisch.

Die Nachrichtenübertragung kann dabei - ebenso wie bei der konventionellen Datenübertragung - auch bidirektional vonstatten gehen. Auch eine parallele Mehrfachübertragung, wie aus der Nachrichtentechnik bekannt, kann eingesetzt werden.

In Figur 3 ist ein Ausführungsbeispiel (Verwendungsbeispiel) für ein Nachrichtübertragungssystem für die Verwendung bei einem Reifendruckmesssystem eines Kraftfahrzeugs dargestellt. In jedem Reifen 12 des Fahrzeugs befindet sich jeweils ein Sender Tx₁ bis Tx₅ (es kann auch das Reserverad mit einem Sender Tx₅ versehen sein). Die Reifen sind über die elektrisch leitenden Felgen 13 und die Radachse 14 mit der Karosserie 15 des Kraftfahrzeugs verbunden. Felgen 13, Radachsen 14 und Karosserie 15 sind elektrisch leitend und stellen den Infrastrukturkörper 3 mit seinem Leiterelement 6 dar.

Ein zentraler Empfänger Rx (oder jeweils ein jedem Rad zugeordneter Empfänger Rxᵢ) ist mittelbar oder unmittelbar mit der leitenden Karosserie 15 elektrisch verbunden und fahrzeugseitig an geeigneter Stelle angeordnet. Um nun Daten, wie Reifendruck, Temperatur im Reifen, Identifikationsnummer des Reifens oder Ähnliches, vom jedem Sender Txᵢ zum Empfänger Rx (oder auch in umgekehrte Richtung) zu übertragen, werden die ohnehin vorhandenen Infrastrukturkörper 3, 13, 14, 15 mit ihren elektrisch leitenden Elementen ausgenutzt. Hierzu erzeugt jeder Sender Txᵢ ein quasistationäres elektrisches Nahfeld, das in die Felge 13 eingekoppelt wird. Von dort fließt dann ein Leitungsstrom I_{HF} über die Radachse 14 zur Karosserie 15. Der Empfänger Rx kann dann durch elektrisches Auskoppeln des quasistationären elektrischen Nahfeldes in der Nähe der Karosserie 15 die Signale auskoppeln und daraus die Daten demodulieren.

Der Rückfluss des Stromes geschieht dann über einen Verschiebungsstrom im quasistationären elektrischen Nahfeld der Bodekapazitäten C_{B3} des Empfängers Rx zum Boden, über den Leitungsstrom I_{HF} im Boden und über die Bodenkapazitäten C_{B1} bzw. C_{B2} der Sender Tx₁, ₂ zurück zum Sender Tx₁, 2. Falls zwischen Felge 13, Radachse 14 und Karosserie 15 keine unmittelbare elektrische Verbindung vorhanden sein sollte, so wird dennoch die Nachrichtenübertragung nicht unterbrochen, da diese Teile eine Koppelkapazität zueinander aufweisen, die über einen Verschiebungsstrom leicht und ohne größere Verluste überbrückbar sind.

Die Sender Tx₁ und Tx₂ weisen jeweils Bodenkapazitäten C_{B1} bzw. C_{B2} auf, während die Radachse 14 als Leiterelement eine elektrische Impedanz C_{B4} als Bodenkapazitäten gegenüber Erdpotenzial aufweist. Der Empfänger weist die Bodenkapazitäten C_{B3} auf.

Die Verwendung bei einem Reifendruckmesssystem hat den Vorteil, dass die ausgesendeten Signal mit weitgehend konstanter Amplitude empfangen werden, selbst bei sich drehendem Rad. Denn die Signale werden über die jeweilige Felge 13 und zentral zur Felge 13 angeordnete Radachsen 14 übertragen und haben immer die gleiche Entfernung zurückzulegen. Bei Funksystemen hingegen ändert sich die Amplitude bei sich drehendem Rad periodisch mit der Raddrehzahl, da sich die Entfernung und die Phasenlage zwischen Sender Tx und Empfänger Rx periodisch mit der Raddrehzahl ändern.

Bei einer solchen Verwendung braucht zwischen dem Sender Rx und dem Empfänger Tx keine eigene Nachrichtenübertragungsleitung verlegt zu werden. Es werden die ohnehin vorhandenen Infrastrukturkörper 3 mit ihre leitenden Elementen 6 ausgenutzt. Signale von benachbarten Fahrzeugen werden nicht in die Karosserie 15 eingekoppelt, da diese zu weit entfernt sind und sich somit nicht störend auswirken.

Die fließenden HF-Ströme (Leitungsstrom I_{HF} und Verschiebungsstrom) konzentrieren sich im Wesentlichen auf die leitenden Teile und wirken sich somit nicht auf andere elektrische Einheiten aus. Ein Abhören der Nachrichten ist ebenfalls erschwert, da sich Streufelder schon nach kurzer Distanz nicht mehr auswirken.

Typischerweise sollten zur Übertragung der Nachrichten bei solchen Nachrichtenübertragungssystemen Trägerfrequenzen zwischen 5 MHz und 50 MHz verwendet werden. Selbstverständlich können auch - abhängig von der Verwendung und den geometrischen Abmessungen - andere Frequenzen verwendet werden.

Weitere Verwendungsmöglichkeiten für das Nachrichtenübertragungssystem sind beispielsweise die Sensorsignalübertragung über den Körper einer Werksmaschine, die Prozessorganisation und Steuerung an einem Fließband, das Metallglieder aufweist, die Nachrichtenübertragung bei Verpackungen von Nahrungsmitteln, wobei die Verpackungen metallisierte und elektrisch leitende Etiketten aufweisen, die Sensor- und Signalübertragung in einem Kraftfahrzeug, in einem Flugzeug, in einer Güter- und Kühlkammer eines LKWs oder eines (Container-) Schiffes, die drahtlose Signalübertragung in einem Konferenzzimmer unter Benutzung eines Besprechungstisches, der ein metallenes Gestell aufweist, über das die Leitungsströme fließen, oder die Signalübertragung über beispielsweise ein Heizkörpersystem in einem Gebäude.

Mit dem Nachrichtenübertragungssystem können auch Bussysteme ersetzt werden. Es brauchen also keine separaten Busleitungen verlegt zu werden, sondern es kann die vorhandene Infrastruktur verwendet werden. In der Verkehrstechnik (Schienenverkehr) kann das Nachrichtenübertragungssystem gut verwendet werden, da die Gleise als leitendes Medium ausgenutzt werden können, ohne dass eigene Signalleitungen verlegt werden müssen. Es genügen die Sender 1 mit Sensoren 9 an geeigneten Stellen, die die Signale an den Empfänger 4 beispielsweise im Schienenfahrzeug über die Gleise übertragen.

Das Nachrichtenübertragungssystem kann gut in der Messtechnik verwendet werden, und zwar bei solchen Anwendungen, bei denen extreme Umweltbedingungen existieren, die einer Funkverbindung oder der leitungsgebundenen Übertragung abträglich sind. So kann das Nachrichtenübertragungssystem beispielsweise bei hohen Temperaturen, bei starken Störfeldern, bei hohen Drücken, in aggressiver Atmosphäre, usw. eingesetzt werden, falls ein geeignetes Übertragungsmedium ohnehin vorhanden ist.

Der Infrastrukturkörper 3 muss elektrisch leitende Teile (Leiterelemente 6) aufweisen, über die der Leitungsstrom I_{HF} fließen kann. Der Abstand zwischen den Koppelelementen 2, 5 und dem elektrisch leitenden Medium (Leiterelemente 6) darf nicht zu groß sein, damit noch ein genügend großes, elektrische Feld in den Leiterelement 6 eingestreut wird. Das Leiterelement 6 sollte aus einem weitgehend homogenen Material hergestellt sein, das zeitinvariant elektrisch leitfähig ist. Der menschliche Körper ist hierfür nur ungenügend geeignet, da er einerseits einen hohen "Eingangswiderstand" (Hautwiderstand) und andererseits eine zeitvariante und nicht homogene Leitfähigkeit, d.h. ein abhängig von vielen Bedingungen abhängige Leitfähigkeit aufweist, die auch nicht unbedingt reproduzierbare Ergebnisse liefert. Zudem ist der menschliche Körper nicht gut genug elektrisch kontaktierbar. Insofern wird der Infrastrukturkörper 3 als alternatives Übertragungsmedium genutzt.

Sender 1 und Empfänger 4 können in einem Halbleiterchip integriert sein. Da keine ausgedehnte und auf die Trägerfrequenz abgestimmte Antenne benötigt wird, können Sender 1 und Empfänger 4 bei Anwendungen mit beengten Verhältnissen, selbst in abgeschirmten Bereichen eingesetzt werden. Der Sender 1 kann zudem verschiedene (Mikro-)Sensoren 9 sowie Steuerprozessoren (Steuereinheiten 10) aufweisen und somit unmittelbarer am Ort angeordnet werden können, an dem die interessierende physikalische Größe vorliegt. Dies hat den Vorteil, dass einerseits die physikalische Größe genauer und vor Ort gemessen werden kann und andererseits ein kurzer Weg ohne störenden Einfluss zwischen Sensor 9 und Sender 1 besteht.

EMV-Probleme, wie sie bei einem Funksystem vorhanden sind, hat das erfindungsgemäße Nachrichtenübertragungssystem nicht, da die Streufelder nach außen nur eine geringe Reichweite haben (Nahfeld klingt mit 1/r² oder höheren Potenzen von r) im Gegensatz zum Fernfeld ab, das mit 1/r abklingt.

Durch die unsymmetrische Einspeisung und Übertragung wird Material gespart. Die "Übertragungsleitung", d.h. Leiterelement 6 braucht nicht besonders ausgelegt zu werden, sondern ist ohnehin als Teil des Infrastrukturkörpers 3 vorhanden.

## Patentansprüche

1. Nachrichtenübertragungssystem bei einem Reifendruckmesssystem eines Kraftfahrzeugs mit
- einem Sender (1), der zumindest ein Koppelelement (2) aufweist, über das im Wesentlichen ein elektrisches Nahfeld ausgestreut wird,
- einem ohnehin vorhandenen Infrastrukturkörper (3), der ein von Erde elektrisch isoliertes und elektrisch leitendes Leiterelement (6) aufweist, in das das elektrische Feld eingekoppelt wird, und
- einem Empfänger (4), der zumindest ein Koppelelement (5) aufweist, durch das das in dem Leiterelement (6) übertragene Feld ausgekoppelt wird,
**dadurch gekennzeichnet, dass** das Leiterelement ein Teil der Karosserie (15) des Kraftfahrzeugs ist und dass ein Sender (Txᵢ) in jedem Reifen (12) sowie der zugehörige Empfänger (Rxᵢ) fahrzeugseitig in der Nähe der Karosserie (15) angeordnet sind.

2. Nachrichtenübertragungssystem nach Anspruch 1, **dadurch gekennzeichnet, dass** das elektrische Feld galvanisch oder kapazitiv in das Leiterelement (6) eingekoppelt wird.

3. Nachrichtenübertragungssystem nach einem der vorhergehenden Ansprüche, **dadurch gekennzeichnet, dass** das Leiterelement (6) aus einem weitgehend homogenen Material besteht und zeitinvariant elektrisch leitfähig ist.

4. Nachrichtenübertragungssystem nach einem der vorhergehenden Ansprüche, **dadurch gekennzeichnet, dass** das Leiterelement (6) eine elektrische Impedanz (C_{Bi}) gegenüber Erdpotenzial aufweist.

5. Nachrichtenübertragungssystem nach einem der vorhergehenden Ansprüche, **dadurch gekennzeichnet, dass** das Leiterelement (6) ein unsymmetrisches Leiterelement ist, das als Rückleiter zur Nachrichtenübertragung das Erdpotenzial ausnutzt.

6. Nachrichtenübertragungssystem nach einem der vorhergehenden Ansprüche, **dadurch gekennzeichnet, dass** das elektrische Feld mit einer zu übertragenden Nachricht moduliert ist.

7. Nachrichtenübertragungssystem nach Anspruch 6, **dadurch gekennzeichnet, dass** die Trägerfrequenz etwa zwischen 5 MHz und 50 MHz liegt.

## Claims

1. Information transmission system for a tyre pressure measuring system of a motor vehicle having
- a transmitter (1) comprising at least one coupling element (2) via which substantially an electric near field is emitted.
- an existing infrastructure body (3) comprising an electrically conducting conductor element (6) that is electrically insulated from ground, into which conductor element the electric field is coupled, and
- a receiver (4) comprising a coupling element (5) by means of which the field transmitted in the conductor element (6) is coupled out,
**characterised in that** the conductor element is part of the bodywork (15) of the motor vehicle and that a transmitter (Txᵢ) is disposed in each tyre (12) and the associated receiver (Rxᵢ) is disposed on the vehicle side in the vicinity of the bodywork (15).

2. Information transmission system according to claim 1,
**characterised in that** the electric field is coupled into the conductor element (6) directly or capacitively.

3. Information transmission system according to one of the preceding claims, **characterised in that** the conductor element (6) is made of a substantially homogeneous material and is electrically conductive, said conductance being time-invariant.

4. Information transmission system according to one of the preceding claims, **characterised in that** the conductor element (6) has an electrical impedance (C_{Bi}) with respect to ground potential.

5. Information transmission system according to one of the preceding claims, **characterised in that** the conductor element (6) is an unbalanced conductor element which uses the ground potential as the return line for the information transmission.

6. Information transmission system according to one of the preceding claims, **characterised in that** the electric field is modulated with information to be transmitted.

7. Information transmission system according to claim 6,
**characterised in that** the carrier frequency lies approximately between 5 MHz and 50 MHz.

## Revendications

1. Système de transmission d'informations dans un système de mesure de la pression de gonflage d'un véhicule automobile, comprenant:
- un émetteur (1) qui présente au moins un élément de couplage (2) permettant essentiellement la dispersion d'un champ électrique proche,
- un corps d'infrastructure déjà existant (3) qui présente un élément (6) isolé électriquement de la terre et électriquement conducteur, dans lequel est couplé le champ électrique, et
- un récepteur (4) qui présente au moins un élément de couplage (5) permettant de découpler le champ transmis dans l'élément conducteur (6),
**caractérisé en ce que**
l'élément conducteur fait partie de la carrosserie (15) du véhicule automobile et **en ce qu'**un émetteur (Tₓᵢ) est disposé dans chaque pneu (12) et le récepteur associé (Rₓᵢ) est disposé, côté véhicule, à proximité de la carrosserie (15).

2. Système de transmission d'informations selon la revendication 1,
**caractérisé en ce que** le champ électrique est couplé dans l'élément conducteur (6) de manière galvanique ou capacitive.

3. Système de transmission d'informations selon l'une des revendications précédentes,
**caractérisé en ce que** l'élément conducteur (6) se compose d'un matériau très homogène et est électriquement conducteur de manière invariable dans le temps.

4. Système de transmission d'informations selon l'une des revendications précédentes,
**caractérisé en ce que** l'élément conducteur (6) présente une impédance électrique (C_{bi}) par rapport au potentiel de masse.

5. Système de transmission d'informations selon l'une des revendications précédentes,
**caractérisé en ce que** l'élément conducteur (6) est un élément conducteur non symétrique qui utilise le potentiel de masse comme système de reconduction pour la transmission des informations.

6. Système de transmission d'informations selon l'une des revendications précédentes,
**caractérisé en ce que** le champ électrique est modulé avec une information à transmettre.

7. Système de transmission d'informations selon la revendication 6,
**caractérisé en ce que** la fréquence porteuse est à peu près comprise entre 5 MHz et 50 MHz.
